# EUROPÄISCHE PATENTSCHRIFT

(11) **EP 0 912 094 B1**
(45) Veröffentlichungstag und Bekanntmachung des Hinweises auf die Patenterteilung: **09.06.2004**
(21) Anmeldenummer: 97928244.9
(22) Anmeldetag: 19.06.1997
(51) Int. Cl.: A01N 53/00

(54) **NEUE INSEKTIZIDE FORMULIERUNGEN**
NEW INSECTICIDE FORMULATIONS
NOUVELLES FORMULATIONS INSECTICIDES

(30) Priorität: 02.07.1996 DE 19626469
(43) Veröffentlichungstag der Anmeldung: 06.05.1999
(73) Patentinhaber: S.C.Johnson & Son, Inc., Racine, WI 53403-2236 (US)
(72) Erfinder: SCHMITT, Guido, D-51375 Leverkusen (DE); SCHMITZ, Gerd, D-51371 Leverkusen (DE); WALZ, Klaus, D-51381 Leverkusen (DE); MIELKE, Burkhard, D-51375 Leverkusen (DE); NEUMANN, Hermann, 12430 Jakarta Selatan (ID)
(74) Vertreter: Ruschke, Hans Edvard, Dipl.-Ing.
(86) Internationale Anmeldenummer: PCT/EP1997/003199
(87) Internationale Veröffentlichungsnummer: WO 1998/000020

(56) Entgegenhaltungen:
- EP-A- 0 279 325
- FR-A- 2 379 506
- CHEMICAL ABSTRACTS, vol. 126, no. 8, 1997 Columbus, Ohio, US; abstract no. 100715, KATSUTA: "Heat vaporizing aqueous insecticides containing cyclopropanecarboxylate pyrethroids and insect control with them" XP002042231 & JP 08 310 907 A

## Beschreibung

Die Erfindung betrifft flüssige Formulierungen zur geregelten und lang anhaltenden Freisetzung von insektiziden Wirkstoffen mittels einer Wärmequelle sowie die zur Herstellung dieser Formulierungen benötigten Vorlösungen und ein Verfahren zur Herstellung der insektiziden Formulierungen. Die Erfindung betrifft insbesondere flüssige insektizide Formulierungen in Form von wässrigen Emulsionen zur Verdampfung mit Hilfe von Elektroverdampfern mit Docht, die dadurch gekennzeichnet sind, dass sie als Insektizid Transfluthrin, einen oder mehrere Emulgatoren, ein oder mehrere spezifische Co-Tenside bzw. Co-Lösungsmittel und mehr als 90 % Wasser als Lösungsmittel enthalten.

Aus dem Stand der Technik sind elektrische Heizgeräte zur Abtötung von Insekten wie z.B. Stechmücken bekannt, z.B. sogenannte Plättchenverdampfer. Bei diesem Verfahren werden geeignete Stoffe, wie z.B. Zellstoff- und Baumwollkarton, Asbest, Keramik und/oder poröse Kunstharze, mit insektiziden Wirkstofflösungen imprägniert, wobei Insektizidplättchen erhalten werden. Die Insektizide werden durch die Wirkung eines Heizgerätes, das eine Temperatur von 120 bis 190°C erzeugt, verflüchtigt.

Ein erheblicher Nachteil dieser Plättchenverdampfer besteht in einem ungünstigen Verhältnis zwischen dem Energieaufwand und der zu verdampfenden Wirkstoffmenge, da die Wirkstoffanteile im Verhältnis zu den Hilfsstoffen als gering anzusehen sind. Ferner bedingt die hohe Arbeitstemperatur und die Arbeitsweise dieser Verdampfer, daß die Wirkstoffe systembedingt über die vorgegebene Wirkdauer sehr ungleichmäßig abgegeben werden. Die Wirkdauer dieser Verdampferplättchen ist hierbei auf maximal 12 Stunden beschränkt. Das ungünstige Verhältnis von Wirkstoff zu Wirkstoffträger erfordert schließlich ständig einen größeren Vorrat an Verdampferplättchen, was zu einem erheblichem Materialverbrauch führt.

Seit längerer Zeit sind Verdampfergeräte für den Hausgebrauch bekannt, wie sie in der GB 2 153 227 beschrieben sind, bei denen die Verdampfung einer insektiziden Wirkstofflösung mittels eines beheizten Dochtes erfolgt, worin der Wirkstoff in einem Gemisch gesättigter, aliphatischer Kohlenwasserstoffe gelöst wird, das mit Hilfes des Dochtes elektrisch verdampft wird.

Die in diesen sogenannten Flüssigverdampfern benötigte, im Verhältnis zur Wirkstoffmenge erhebliche Menge an organischem Lösungsmittel führt bei der Produktanwendung zu einer hohen Lösungsmittel-Konzentration im Raum.

Dies wiederum verursacht eine - häufig von Verbrauchern reklamierte - Verschmutzung von Wänden und Gegenständen, die sich in der Nähe dieser Geräte befinden.

Ein entscheidender Nachteil, der in diesen Geräten verwendeten Formulierungen besteht in dem Umstand, daß ihre Anwendung zu einer Dauerbelastung der Raumluft mit organischen Substanzen wie gesättigten Kohlenwasserstoffen führt, was unter gesundheitlichen Gesichtspunkten immer weniger wünschenswert erscheint.

Weitere Nachteile dieser Formulierungen bestehen in der Gefahr des Auslaufens der brennbaren Lösungsmittel, was erhebliche Probleme bei Transport und Lagerung und Gefahren bei der Anwendung mit sich bringt.

In EP 0 279 325 wird die Herstellung gebrauchsfertiger flüssiger Formulierungen (Emulsionen) von Transfluthrin beschrieben. Diese Formulierungen enthalten vorzugsweise zwischen 0,02 und 90 % Wirkstoff und können durch Vermischen des Wirkstoffes mit Wasser und organischen Lösungsmitteln unter Verwendung von oberflächenaktiven Mitteln hergestellt werden. Es können in den Formulierungen auch Hilfsstoffe und/oder Parfümöl und/oder Stabilisatoren verwendet werden. Als oberflächenaktive Mittel werden nicht-ionogene und anionische Emulgatoren, z.B. Polyoxyethylenfettsäureester, Polyoxyethylenfettalkoholether, Alkylsulfonate oder Alkylsulfate verwendet.

Aufgabe der Erfindung war es, das hochwirksame Insektizid Transfluthrin so zu formulieren, dass die dabei erhaltenen Formulierungen nicht nur stabil gelagert werden können, sondern darüber hinaus in Verbindung mit organischen und anorganischen Hilfsstoffen, Emulgatoren, Lösungsvermittlern, Stabilisatoren, Antioxidantien, Duft- und Farbstoffen aus physiologisch unbedenklichen Lösungen bzw. Emulsionen gleichmäßig und über einen längeren Zeitraum hinweg, unzersetzt mittels einer Wärmequelle verdampft werden können. Die Verdampfung soll dabei aus einer handelsüblichen Verdampfungsapparatur erfolgen, bei der eine physiologisch unbedenkliche Lösung bzw. Emulsion durch einen geeigneten Docht aufgesogen und durch Beheizung des oberen Bereiches dieses Dochtes in die Atmosphäre abgegeben wird.

Es wurde nun gefunden, dass diese Aufgabe erfindungsgemäß gelöst werden kann mit einer flüssigen insektiziden Formulierung in Form einer wässrigen Emulsion zur Verdampfung mit Hilfe von Elektroverdampfern mit Docht, bei der die Nachteile des Standes der Technik nicht auftreten, weil als Lösungsmittel Wasser verwendet wird.

Aufgrund der Verwendung von Wasser als Lösungsmittel sind die erfindungsgemäßen insektiziden Formulierungen nicht brennbar und organisch-chemische Substanzen werden in einem erheblich geringeren Ausmaß in die umgebende Raumluft abgegeben, sodass durch die Verdampfung dieser flüssigen insektiziden Formulierung auf die vorstehend beschriebene Weise Insekten, wie z.B. Mücken oder Motten, zuverlässig abgetötet werden können.

Gegenstand der Erfindung sind neue flüssige insektizide Formulierungen in Form von wässrigen Emulsionen zur Verdampfung mit Hilfe von Elektroverdampfern mit Docht, die dadurch gekennzeichnet sind, dass sie enthalten Transfluthrin, einen oder mehrere Emulgatoren und ein oder mehrere Co-Tenside bzw. Co-Lösungsmittel aus der Gruppe verzweigte und unverzweigte Alkohole mit 3 bis 10 Kohlenstoffatomen, Cycloalkanole mit 5 bis 8 Kohlenstoffatomen, (C₂-C₆)-Alkylester von (C₂-C₆)-Hydroxycarbonsäuren, (C₁-C₁₂)-Alkylpyrrolidone, (C₁-C₁₂)-Alkylcaprolactame, Cyclohexylpyrrolidon und -caprolactam, (C₄-C₁₂)-Carbonsäuredimethylamide und -diethylamide, Benzylalkohol und hochsiedende Mineralöle.

Gemäß bevorzugten Ausführungsformen können die erfindungsgemäßen flüssigen insektiziden Formulierungen enthalten:
zusätzlich organische oder anorganische Hilfsstoffe und/oder Stabilisatoren und/oder Duftstoffe und/oder Farbstoffe;
einen oder mehrere Emulgatoren aus der Reihe
   a) nichtionische Emulgatoren:
      Umsetzungsprodukte von unsubstituierten oder substituierten Phenolen, jeweils ungesättigten oder gesättigten Fettalkoholen, Fettsäuren, Fettsäurealkanolamiden oder Fettaminen, pflanzlichen Ölen oder Fetten, Fettsäurepartialestern von Polyolen mit Ethylenoxid und gegebenenfalls Propylenoxid, Sorbitanester von Fettsäuren, Fettsäureester von Polyolen wie Saccharose, Glucose oder Sorbitan,
   b) anionische Emulgatoren:
      jeweils 8 bis 22 Kohlenstoffatome enthaltende gesättigte oder ungesättigte Alkansulfonate, Alkylsulfate, Alkylphosphate, Alkylethersulfate, Alkyletherphosphate, Fettsäuresalze, Alkylethercarboxylate, Acyltauride oder -sarkoside,
   c) kationische Emulgatoren:
      8 bis 22 Kohlenstoffatome enthaltende Aminsalze, quaternäre Ammo-niumverbindungen oder Imidazoliniumverbindungen,
   d) amphotere Emulgatoren:
      8 bis 22 Kohlenstoffatome enthaltende Betaine, Sulfobetaine oder Aminoxide;
als Emulgator(en) insbesondere Umsetzungsprodukte von 4 bis 50 Mol Ethylenoxid und gegebenenfalls Propylenoxid mit Phenolen (1 Mol), die durch einen oder mehrere der Reste (C₁-C₁₂)-Alkyl, (C₃-C₆)-Cycloalkyl, Phenyl, Phenyl-(C₁C₃)-alkyl, Methylphenyl-(C₁-C₃)-alkyl substituiert sind, und/oder Umsetzungsprodukte von 5 bis 50 Mol (pro Äquivalent Fettsäurerest) Ethylenoxid und gegebenenfalls Propylenoxid mit (C₁₀-C₂₂)-Fettalkoholen, Fettsäuren oder Fettsäureglyceriden; oder/und
desodorierende Mittel.

Die erfindungsgemäßen flüssigen insektiziden Formulierungen enthalten vorzugsweise, jeweils bezogen auf das Gesamtgewicht der Formulierung,
zwischen 0,01 und 10 Gew.-% Transfluthrin,
zwischen 0,01 und 5 Gew.-% Emulgator(en),
zwischen 0,01 und 5 Gew.-% Co-Tensid(e) bzw. Co-Lösungsmittel und
als Rest Wasser.

Gegenstand der Erfindung sind ferner Vorlösungen zur Herstellung der oben genannten erfindungsgemäßen flüssigen insektiziden Formulierungen, die dadurch gekennzeichnet sind, dass sie, jeweils bezogen auf das Gesamtgewicht der Vorlösung, enthalten
zwischen 10 und 70 Gew.-%, vorzugsweise zwischen 15 und 40 Gew-% Transfluthrin,
zwischen 10 und 70 Gew.-%, vorzugsweise zwischen 15 und 40 Gew.-% Emulgator(en),
zwischen 10 und 60 Gew.-%, vorzugsweise zwischen 20 und 45 Gew.-% Co-Tensid(e) bzw. Co-Lösungsmittel und
gegebenenfalls Wasser.

Die Erfindung betrifft ferner ein Verfahren zur Herstellung der vorstehend beschriebenen flüssigen insektiziden Formulierungen, bei dem eine Vorlösung mit der vorstehend angegeben Zusammensetzung hergestellt wird, die dann unter sehr guter Durchmischung mit kleinen Portionen Wasser auf das gewünschte Volumen zur Emulsion verdünnt wird.

Die erfindungsgemäßen flüssigen Formulierungen in Form von wässrigen Emulsionen sind in handelsüblichen Flüssigverdampfern bei den üblichen Verdampfungstemperaturen von 100 bis 160 °C einfach anzuwenden und gewährleisten eine kontinuierliche Abgabe des Wirkstoffes Transfluthrin in einem Zeitraum von bis zu 60 Tagen, vorzugsweise bis zu 45 Tagen.

Die weiteren Zusatzstoffe, Duftstoffe und Farbstoffe können entweder der Vorlösung oder der fertigen verdünnten insektiziden wässrigen Emulsion zugemischt werden. Alternativ können die erfindungsgemäßen insektiziden Formulierungen auch durch direktes aufeinanderfolgendes Vermischen der einzelnen Bestandteile erhalten werden.

Der Wirkstoff Transfluthrin ist für die erfindungsgemäßen insektiziden Formulierungen und deren Anwendungen besonders geeignet, da er sich in der angegebenen Weise besonders gut emulgieren lässt und sich durch eine für die Anwendung notwendige hohe thermische Stabilität auszeichnet, sodass bei der Verdampfung keine Zersetzungsprodukte entstehen, die den Transportprozess durch den Docht und die Verdampfung aus dem oberen Dochtende stören würden.

Von anderen Wirkstoffen, wie z.B. d-Allethrin oder Bioallethrin, die normalerweise in Flüssigverdampfersystemen Verwendung finden, ist bekannt, dass sie sich schlecht emulgieren lassen und außerdem dazu neigen, sich bei thermischer Belastung zu zersetzen und Zersetzungsprodukte zu bilden, die den Docht verstopfen.

Geeignete Emulgatoren für die Verwendung in den erfindungsgemäßen insektiziden Formulierungen sind z.B.
nichtionische Emulgatoren, wie z.B. Umsetzungsprodukte von unsubstituierten oder substituierten Phenolen, jeweils ungesättigten oder gesättigten Fettalkoholen, Fettsäuren, Fettsäurealkanolamiden oder Fettaminen, pflanzlichen Ölen oder Fetten, Fettsäurepartialestern von Polyolen mit Ethylenoxid und gegebenenfalls Propylenoxid, Sorbitanester von Fettsäuren, Fettsäureester von Polyolen wie Saccharose, Glucose oder Sorbitan,
anionische Emulgatoren, wie z.B. jeweils 8 bis 22 Kohlenstoffatome enthaltende gesättigte oder ungesättigte Alkansulfonate, Alkylsulfate, Alkylphosphate, Alkylethersulfate, Alkyletherphosphate, Fettsäuresalze, Alkylethercarboxylate, Acyltauride oder - sarkoside,
kationische Emulgatoren, wie z.B. 8 bis 22 Kohlenstoffatome enthaltende Aminsalze, quaternäre Ammoniumverbindungen oder Imidazoliniumverbindungen,
amphotere Emulgatoren, wie z.B. 8 bis 22 Kohlenstoffatome enthaltende Betaine, Sulfobetaine oder Aminoxide.

Bevorzugt werden als Emulgatoren verwendet:

Umsetzungsprodukte von 4 bis 50, insbesondere 8 bis 30 Mol Ethylenoxid und gegebenenfalls Propylenoxid mit Phenolen (1 Mol), die durch einen oder mehrere der Reste (C₁-C₁₂)-Alkyl, (C₃-C₆)-Cycloalkyl, Phenyl, Phenyl-(C₁-C₃)-alkyl, Methylphenyl-(C₁-C₃)-alkyl substituiert sind, sowie Umsetzungsprodukte von 5 bis 50, insbesondere 8 bis 30 Mol (pro Äquivalent Fettrest) Ethylenoxid und gegebenenfalls Propylenoxid mit(C₁₀-C₂₂)-Fettalkoholen, Fettsäuren oder Fettsäureglyceriden.

Als weitere Emulgatoren können die wäßrigen Formulierungen zusätzlich vorzugsweise noch Alkali- und/oder Erdalkalisalze von (C₁₀-C₂₀)-Alkansulfonsäuren, insbesondere Dodecylbenzolsulfonsäure, enthalten.

Besonders bevorzugt verwendet werden die folgenden Emulgatoren, die einzeln oder als Gemisch Verwendung finden:
- Emulgator 1371 A (67 % Alkylarylsulfonat, 23 % n-Butanol, CAS # 90 194-26-6), ein lineares Calciumarylsulfonat in n-Butanol als Lösung: 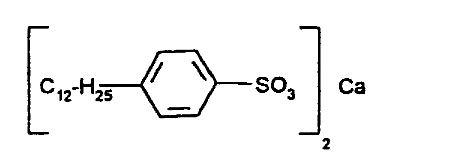
- Emulgator 1371 B (100 % Fettsäurepolyethylenglykoletherester, CAS # 61791-12-6), ein Umsetzungsprodukt von Rizinusöl mit 20-40 Mol Ethylenoxid,
- Emulgator 368 rein (100 % Arylpolyglycolether, CAS # 73297-33-3) der folgenden Formel: 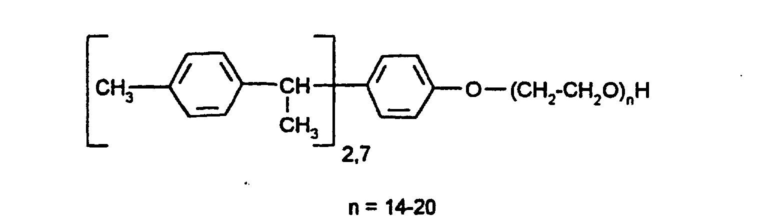
- Emulgator PS 16 (100 % Arylpolyglycolether, CAS # 104376-75-2) der folgenden Formel: 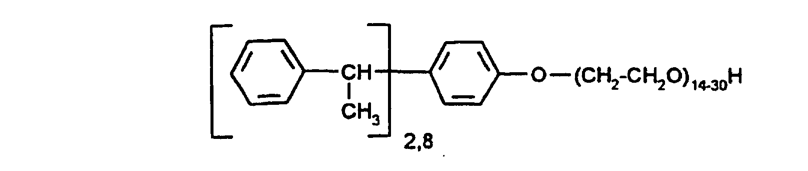
- Emulgator PS 29 (100 % Arylpolyglycolether, CAS # 104376-75-2) der folgenden Formel: 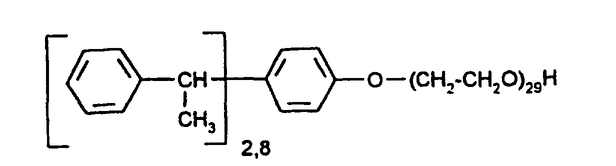
- Emulgator L7 (100 % Fettalkoholpolyglykolether, CAS # 68213-23-0) der folgenden Formel:

   CH₃-(CH₂)₁₁₋₁₇-O(CH₂CH₂O)₇-H
- Umsetzungsprodukte von 12 bis 18 Kohlenstoffatome enthaltenden gegebenenfalls ungesättigten Fettalkoholen mit 6-15, insbesondere 7-10 Mol Ethylenoxid,
gegebenenfalls in Kombination mit Alkali- und/oder Erdalkalisalzen von (C₁₀⁻C₂₀)-Alkansulfonsäuren, insbesondere Dodecylbenzolsulfonsäure.

Als geeignete Co-Tenside bzw. Co-Lösungsmittel sind in den erfindungsgemäßen insektiziden Formulierungen verwendbar:
verzweigte oder unverzweigte Alkohole mit 3 bis 10 Kohlenstoffatomen, Cycloalkanole mit 5 bis 8 Kohlenstoffatomen, (C₂-C₆)-Alkylester von (C₂-C₆)-Hydroxycarbonsäuren, (C₁-C₁₂)-Alkylpyrrolidone, (C₁-C₁₂)-Alkylcaprolactame, Cyclohexylpyrrolidon und -caprolactam, (C₄-C₁₂)-Carbonsäuredimethylamide oder -diethylamide, Benzylalkohol und hochsiedende Mineralöle.

Vorzugsweise werden als Co-Tenside bzw. Co-Lösungsmittel verwendet:
aliphatische (C₃-C₈)-Alkohole, Cyclohexanol, Methylcyclohexanol, (C₃-C₄)Alkyllactate, Cyclohexylpyrrolidon, Octylpyrrolidon, Decylpyrrolidon, Dodecylpyrrolidon, Dimethylamide der Octansäure, Decansäure, Undecansäure oder hochsiedende Mineralöle.

Den erfindungsgemäßen insektiziden Formulierungen können gegebenenfalls z.B. die folgenden Farbstoffe zugesetzt werden:
Anorganische Pigmente, wie Eisenoxid, Titanoxid, Ferrocyanblau,
Organische Farbstoffe, wie Alizarin, Azo- und Metall-phthalocyanin-Farbstoffe und
Spurennährstoffe, wie Salze von Eisen, Mangan, Bor, Kupfer, Cobalt, Molydän und Zink.

Diese Farbstoffzusätze zu den erfindungsgemäßen insektiziden Formulierungen ermöglichen einerseits, daß man die Flüssigkeit im Vorratsbehälter deutlich erkennt, andererseits können sie aber auch zur optischen Endpunkterkennung der biologischen Wirksamkeit des Systems herangezogen werden.

Eine Variante der optischen Endpunkterkennung durch zugesetzte Farbstoffe kann auch durch Farbumschlag zu einer anderen Farbe hin erfolgen, wenn der Wirkstoff und das Wasser verdampft sind.

Den erfindungsgemäßen insektiziden Formulierungen können desodorierende Mittel zugesetzt werden, wie z. B. Laurylmethacrylat, Geranylcrotonat, Acetophenonmyristat, pMethylacetophenon-benzaldehyd, Benzylacetat, Benzylpropionat, Amylzimtaldehyd, Anisaldehyd, Diphenyloxid, Methylbenzoat, Ethylbenzoat, Methylphenylacetat, Ethyl-phenylacetat, Neolin und Safrol.

Weiterhin können den erfindungsgemäßen insektiziden Formulierungen natürliche Duftstoffe zugesetzt werden, wie z. B. Moschus, Zibet, Ambra, Castoreum und ähnliche Duftstoffe, Ajowaöl, Mandelöl, Ambrettesamen absol., Angelikawurzelöl, Anisöl, Basilikumöl, Lorbeeröl, Benzoinresinoid, Bergamottessenz, Birkenöl, Rosenholzöl, Pfriemenkraut absol., Cajeputöl, Canangaöl, Capiscumöl, Kümmetöl, Cardamonöl, Möhrensamenöl, Cassiaöl, Zederholzöl, Selleriesamenöl, Zimtrindenöl, Zitronellöl, Muskattellersalbeiöl, Nelkenöl, Kognaköl, Korianderöl, Cubebenöl, Kampferöl, Dillöl, Estragonöl, Eukalyptusöl, Fenchelöl süß, Galbanumresinoid, Knoblauchöl, Geraniumöl, Ingweröl, Grapefruitöl, Hopfenöl, Hyacinthe absol., Jasmin absol., Wacholderbeerenöl, Labdanumresinoid, Lavendelöl, Lorbeerblätteröl, Zitronenöl, Lemonengrasöl, Liebstöckelöl, Macisöl, Mandarinenöl, Mimosa absol., Myrrhe absol., Senföl, Narcisse absol., Neroliöl, Muskatöl, Eichenmoos absol., Olibanumresinoid, Zwiebelöl, Opoponaxresinoid, Orangenöl, Orangenblütenöl, Iris konkret, Pfefferöl, Pfefferminzöl, Perubalsam, Petitgrainöl, Fichtennadelöl, Rose absol., Rosenöl, Rosmarinöl, Sandelholzöl, Salbeiöl, Krauseminzöl, Styraxöl, Thvmianöl, Tolubalsam, Tonkabohnen absol., Tuberose absol., Terpentinöl, Vanilleschoten absol., Vetiveröl, Veilchenblätter absol., Ylang-Ylang-Öl und ähnliche Pflanzenöle.

Als synthetische Duftstoffe können den erfindungsgemäßen insektiziden Formulierungen zugesetzt werden: Pinen, Limonen und ähnliche Kohlenwasserstoffes 3,3,5-Trimethylcyclohexanol, Linalool, Geraniol, Nerol, Citronellol, Menthol, Borneol, Borneylmethoxycyclohexanol, Benzylalkohol, Anisalkohol, Zimtalkohol, Phenylethylalkohol, cis-3-Hexanol, Terpineol und ähnliche Alkohole; Anethole, Moschusxylol, Isoeugenol, Methyleugenol und ähnliche Phenole; Amylzimtaldehyd, Anisaldehyd, n-Butyraldehyd, Cuminaldehyd, Cyclamenaldehyd, Decylaldehyd, Isobutyraldehyd, Hexvlaldehyd, Heptylaldehyd, n-Nonylaldehydnonadienol, Citral, Citronellal, Hydroxycitronellal, Benzaldehyd, Methylnonylacetaldehyd, Zimtaldehyd, Dodecanal, Hexylzimtaldehyd, Undecanal, Heliotropin, Vanillin, Ethylvanillin, und ähnliche Aldehyde, Methylamylketon, Methyl-naphtylketon, Methylnonylketon, Moschusketon, Diacetyl, Acetylpropionyl, Acetylbutyryl, Carvon, Methon, Campher, Acetophenon, p-Methylacetophenon, Jonon, Methyljonon und ähnliche Ketone, Amylbutyrolacton, Diphenyloxid, Methylphenylglycidat, Nonylaceton, Cumarin, Cineol, Ethylmethylphenylglycidat und ähnliche Lactone bzw. Oxide, Methylformiat, Isopropylformiat, Linalylformiat, Ethylacetat, Octylacetat, Methylacetat, Benzylacetat, Cinnamylacetat, Butylpropionat, Isoamylacetat, Isopropylisobutyrat, Geranylisovalerat, Allylcapronat, Butylheptylat, Octylcaprylat, Methylheptincarboxylat, Methyloctincarboxylat, Isoamylcaprylat, Methyllaurat, Ethylmyristat, Methylmyristat, Ethylbenzoat, Benzylbenzoat, Methylcarbinylphenylacetat, Isobutylphenylacetat, Methylcinnamat, Styracin, Methylsalicylat, Ethylanisat, Methylanthranilat, Ethylpyruvat, Ethylbutylbutyrat, Benzylpropionat, Butylacetat, Butylbutyrat, p-tert-Butylcyclohexylacetat, Cedrylacetat, Citronellylacetat, Citronellylformiat, p-Cresylacetat, Ethylbutyrat, Ethylcaproat, Ethylcinnamat, Ethylphenylacetat, Ethylenbrassyl at, Geranylacetat, Geranylformiat, Isoamylsalicylat, Isoamylvalerat, Isobornylacetat, Linolylacetat, Methylanthranilat, Methyldihydrojasmonat, Nonylacetat, Phenyl ethyl acetat, Tri-chlormethylenphenylcarbinylacetat, Terpinylacetat, Vetiverylacetat und ähnliche Ester.

Diese Duftstoffe können einzeln verwendet werden oder mindestens zwei davon können im Gemisch miteinander verwendet werden. Neben dem Duftstoff kann die erfindungsgemäße Formulierung gegebenenfalls zusätzlich die in der Duftstoffindustrie üblichen Zusatzstoffe, wie Patchouliöl bzw. ähnliche flüchtigkeitshemmende Mittel, wie Eugenol bzw. ähnliche viskositätsregulierende Mittel enthalten.

Die Herstellung, Zusammensetzung und Eigenschaften der erfindungsgemäßen neuen insektiziden Formulierungen werden anhand der nachfolgenden Beispiele erläutert.

### Beispiel 1:

### Herstellung der Vorlösungen:

Der Emulgator und der Wirkstoff (Transfluthrin) werden vorgelegt und unter Rühren innerhalb von 10 Minuten bei Raumtemperatur homogenisiert. Nach der Homogenisierung wird unter Rühren bei Raumtemperatur das Co-Tensid bzw. Co-Lösungsmittel und gegebenenfalls Wasser langsam zugegeben.

Auf diese Weise wurden die folgenden Vorlösungen erhalten:

| **Beispiel Nr.** | **Bestandteil** | **Menge (%)** |
|---|---|---|
| 1.1. | Transfluthrin | 43,0 |
| | N-Octylpyrrolidon | 40,0 |
| | Emulgator 368 rein | 8,5 |
| | Emulgator PS 29 | 8,5 |
| 1.2. | Transfluthrin | 45,0 |
| | N-Octylpyrrolidon | 40,0 |
| | Emulgator 368 rein | 7,5 |
| | Emulgator PS 29 | 7,5 |
| 1.3. | Transfluthrin | 26,6 |
| | N-Octylpyrrolidon | 25,0 |
| | Emulgator 368 rein | 10,0 |
| | Isopropanol | 1,0 |
| | Wasser | 37,4 |
| 1.4. | Transfluthrin | 40,0 |
| | Emulgator 368 rein | 30,0 |
| | 1-Butanol | 10,0 |
| | Wasser | 20,0 |
| 1.5. | Transfluthrin | 30,0 |
| | Emulgator 368 rein | 40,0 |
| | 1-Butanol | 30,0 |
| 1.6. | Transfluthrin | 40,0 |
| | Marlowet OFA* | 20,0 |
| | Isopropanol | 20,0 |
| 1.7. | Transfluthrin | 40,0 |
| | Emulgator 368 rein | 40,0 |
| | Isopropanol | 20,0 |
| 1.8. | Transfluthrin | 40,0 |
| | Emulgator 1371 B | 26,7 |
| | Isopropanol | 33,3 |
| 1.9. | Transfluthrin | 40,0 |
| | Emulgator 1371 B | 40,0 |
| | Isopropanol | 20,0 |
| 1.10. | Transfluthrin | 19,40 |
| | Emulgator L7 | 3,70 |
| | Emulgator 368 | 7,30 |
| | Na-ABS-Lösung (10 %) | 2,20 |
| | Isopropanol | 0,80 |
| | N-Octylpyrrolidon | 22,60 |
| | Wasser | 44,0 |
| 1.11. | Transfluthrin | 20,0 |
| | Emulgator L7 | 4,50 |
| | Emulgator 368 | 9,00 |
| | Na-ABS-Lösung (10 %) | 4,50 |
| | Isopar V | 20,00 |
| | N-Octylpyrrolidon | 23,00 |
| | Wasser | 19,00 |
| 1.12. | Transfluthrin | 30,00 |
| | Emulgator 1371 A | 10,00 |
| | Emulgator L7 | 15,00 |
| | Isopar V | 40,00 |
| | Wasser | 5,0 |
| 1.13. | Transfluthrin | 17,00 |
| | Emulgator 1371 A | 10,00 |
| | Emulgator L7 | 15,00 |
| | Isopar V | 51,00 |
| | Wasser | 7,0 |

| | | |
|---|---|---|
| * Marlowet OFA ist ein Gemisch, bestehend aus: | | |

- Triethanolaminsalzen von C₁₀-C₁₃-Alkylbenzolsulfonsäure
- ethoxylierter Ölsäure
- Triethanolamin und
- ethoxyliertem Dodecanol

### Beispiel 2:

### Herstellung der flüssigen insektiziden Verdampfer-Emulsionen

Die Vorlösung wird vorgelegt. in kleinen Portionen wird unter sehr guter Durchmischung die berechnete Menge an entmineralisiertem Wasser zugesetzt, wobei eine opaleszierende Emulsion erhalten wird.

Die folgenden Emulsionen wurden auf diese Weise hergestellt:

| **Beispiel Nr.** | **Bestandteil** | **Menge (%)** |
|---|---|---|
| **2.1.** | Transfluthrin | 1,00 |
| | N-Octylpyrrolidon | 0,93 |
| | Emulgator 368 rein | 0,20 |
| | Emulgator PS 29 | 0,20 |
| | Wasser | 97,67 |
| **2.2.** | Transfluthrin | 1,00 |
| | N-Octylpyrrolidon | 0,89 |
| | Emulgator 368 rein | 0,19 |
| | Emulgator PS 29 | 0,19 |
| | Wasser | 97,73 |
| **2.3.** | Transfluthrin | 0,40 |
| | Emulgator 1371 B | 0,20 |
| | Isopropanol | 0,50 |
| | Wasser | 98,90 |
| **2.4.** | Transfluthrin | 0,40 |
| | Emulgator 1371 B | 0,30 |
| | Isopropanol | 0,50 |
| | Wasser | 98,80 |
| **2.5.** | Transfluthrin | 0,40 |
| | Emulgator 1371 B | 0,40 |
| | Isopropanol | 0,50 |
| | Wasser | 98,70 |
| **2.6.** | Transfluthrin | 0,80 |
| | Emulgator 1371 B | 0,60 |
| | Isopropanol | 0,50 |
| | Wasser | 98,10 |
| **2.7.** | Transfluthrin | 0,40 |
| | Emulgator 1371 B | 0,20 |
| | Isopropanol | 0,50 |
| | Wasser | 98,90 |

| **Beispiel Nr.** | **Bestandteile** | **Menge (%)** |
|---|---|---|
| **2.8.** | Transfluthrin | 0,80 |
| | Emulgator 1371 B | 0,70 |
| | Isopropanol | 0,50 |
| | Wasser | 98,00 |
| **2.9.** | Transfluthrin | 0,80 |
| | Emulgator 1371 B | 0,80 |
| | Isopropanol | 0,50 |
| | Wasser | 97,90 |
| **2.10.** | Transfluthrin | 1,00 |
| | Emulgator 1371 B | 0,50 |
| | Isopropanol | 0,50 |
| | Wasser | 98,00 |
| **2.11.** | Transfluthrin | 1,00 |
| | Emulgator 1371 B | 0,60 |
| | Isopropanol | 0,50 |
| | Wasser | 97,90 |
| **2.12.** | Transfluthrin | 1,00 |
| | Emulgator 1371 B | 0,70 |
| | Isopropanol | 0,50 |
| | Wasser | 97,80 |
| **2.13.** | Transfluthrin | 1,00 |
| | Emulgator 1371 B | 0,80 |
| | Isopropanol | 0,50 |
| | Wasser | 97,70 |
| **2.14.** | Transfluthrin | 1,00 |
| | Emulgator 1371 B | 0,90 |
| | Isopropanol | 0,50 |
| | Wasser | 97,60 |

| **Beispiel Nr.** | **Bestandteil** | **Menge** (%) |
|---|---|---|
| **2.15.** | Transfluthrin | 1,00 |
| | Emulgator 1371 B | 1,00 |
| | Isopropanol | 0,50 |
| | Wasser | 97,50 |
| **2.16** | Transfluthrin | 1,00 |
| | Emulgator 368 rein | 0,34 |
| | N-Octylpyrrolidon | 0,94 |
| | Isopropanol | 0,04 |
| | Wasser | 97,68 |
| **2.17.** | Transfluthrin | 1,00 |
| | Emulgator 1371 B | 1,32 |
| | 1-Butanol | 0,33 |
| | Wasser | 97,35 |
| **2.18.** | Transfluthrin | 0,80 |
| | Emulgator 1371 B | 0,80 |
| | Isopropanol | 0,40 |
| | Wasser | 98,00 |
| **2.19**. | Transfluthrin | 1,00 |
| | Emulgator 1371 B | 0,67 |
| | Isopropanol | 0,83 |
| | Wasser | 97,50 |
| **2.20.** | Transfluthrin | 0,80 |
| | Emulgator L7 | 0,15 |
| | Emulgator 368 | 0,30 |
| | Na-ABS-Lösung (10 %) | 0,09 |
| | Isopropanol | 0,03 |
| | N-Octylpyrrolidon | 0,93 |
| | Wasser | 97,70 |
| **2.21.** | Transfluthrin | 0,80 |
| | Emulgator L7 | 0,18 |
| | Emulgator 368 | 0,36 |
| | Na-ABS-Lösung (10 %) | 0,18 |
| | Isopar V | 0,80 |
| | N-Octylpyrrolidon | 0,92 |
| | Wasser | 96,76 |

| **Beispiel Nr.** | **Bestandteil** | **Menge (%)** |
|---|---|---|
| **2.22.** | Transfluthrin | 0,80 |
| | Emulgator 1371 A | 0,27 |
| | Emulgator L7 | 0,40 |
| | Isopar V | 1,07 |
| | Wasser | 97,46 |
| **2.23.** | Transfluthrin | 0,82 |
| | Emulgator 1371 A | 0,49 |
| | Emulgator L7 | 0,73 |
| | Isopar V | 2,47 |
| | Wasser | 95,49 |

### Beispiel 3:

### Abgabeverhalten der erfindungsgemäßen insektiziden Verdampferemulsionen

In den Beispielen 3.1 bis 3.3. ist das Verdampfungsverhalten der beispielhaften erfindungsgemäßen insektiziden Formulierung 2.15 unter Verwendung verschiedener Dochtsysteme dargestellt. Die Verdampfungsraten sind in mg/h dargestellt, die kumulierten Verdampfungsraten sind in Prozent angegeben.

### Beispiel 3.1 Formulierung 2.15.

| | |
|---|---|
| Docht | f-32138 Acetatfasern/perforierte Umhüllung |
| Flasche | PET |
| Heizer | Standard KS |
| | |

| Test-Bedingungen | |
|---|---|
| Temperatur | 130°C |
| Zyklendauer | 8h |
| Zyklenfolge | 8/4/8/4 |
| | |
| Wirkstoff | Transfluthrin |

| | | | | | |
|---|---|---|---|---|---|
| Heizer: | 1 | 2 | 3 | 4 | 5 |
| | 130°C | 130°C | 130°C | 130°C | 130°C |

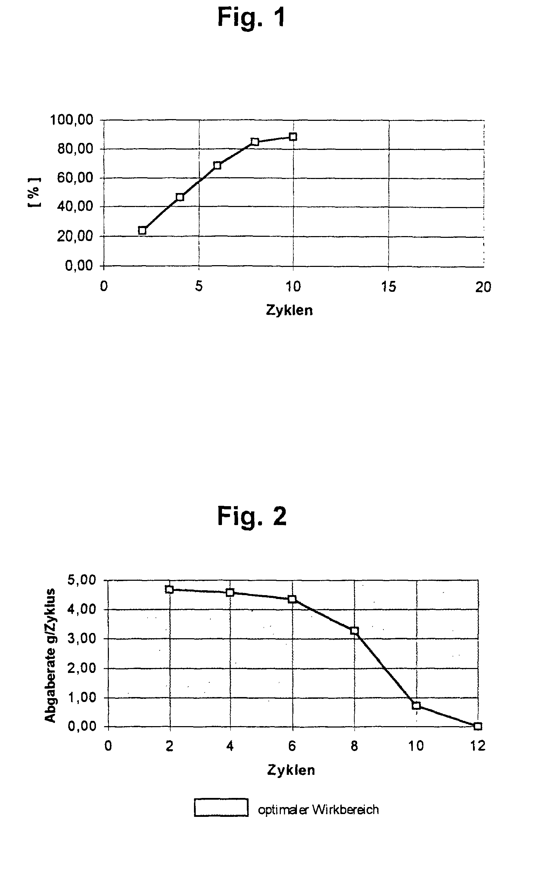

### Kumulierte Abgabemenge: s. Fig. 1

### Abgaberaten: s. Fig. 2

Die Auswertung der Kurve zeigt alle Werte in einem ausgezeichneten Wirkbereich. Bereits bei einer Abgaberate von 0.8 g/Zyklus ist eine gute insektizide Wirkung gegen Stechmücken der Art Aedes aegypty und Culex quinquefasciatus gegeben.

### Beispiel 3.2 Formulierung 2.15.

| | |
|---|---|
| Docht | f-16566 PE-Fasern |
| Flasche | PET |
| Heizer | Standard KS |
| | |

| Test-Bedingungen | |
|---|---|
| Temperatur | 130°C |
| Zyklendauer | 8 h |
| Zyklenfolge | 8/4/8/4 |
| | |
| Wirkstoff | Transfluthrin |

| | | | | | |
|---|---|---|---|---|---|
| Heizer: | 1 | 2 | 3 | 4 | 5 |
| | 130°C | 130°C | 130°C | 130°C | 130°C |

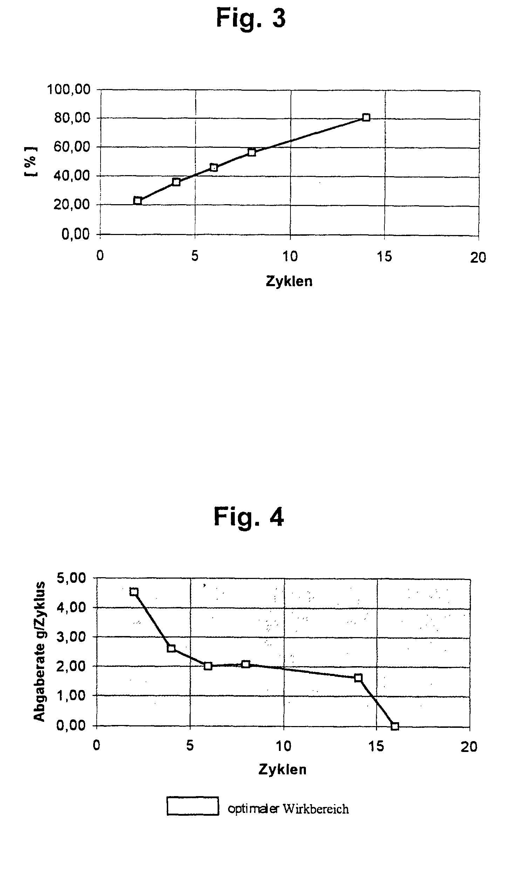

### Kumulierte Abgabemenge: s. Fig. 3.

### Abgaberaten: s. Fig. 4

Die Auswertung der Kurve zeigt alle Werte in einem ausgezeichneten Wirkbereich. Bereits bei einer Abgaberate von 0,8 g/Zyklus ist eine gute insektizide Wirkung gegen Stechmücken der Art Aedes aegypty und Culex quinquefasciatus gegeben.

### Beispiel 3.3 Formulierung 2.15.

| | |
|---|---|
| Docht | Keramik 60 % |
| Flasche | PET |
| Heizer | Standard KS |
| | |

| Test-Bedingungen | |
|---|---|
| Temperatur | 130°C |
| Zyklendauer | 8 h |
| Zyklenfolge | 8/4/8/4 |
| | |
| Wirkstoff | Transfluthrin |

| | | | | | |
|---|---|---|---|---|---|
| Heizer: | 1 | 2 | 3 | 4 | 5 |
| | 130°C | 130°C | 130°C | 130°C | 130°C |

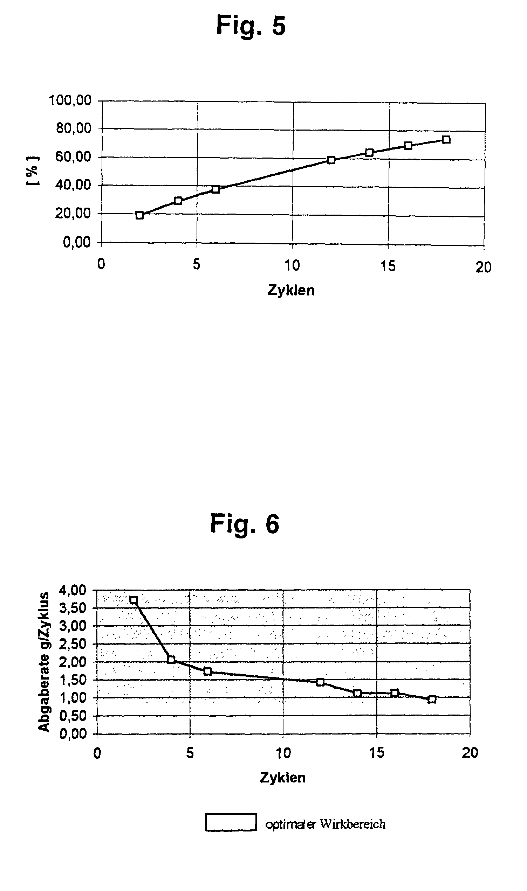

### Kumulierte Abgabemenge: s. Fig. 5.

### Abgaberaten: s. Fig. 6

Die Auwertung der Kurve zeigt alle Werte in einem ausgezeichneten Wirkbereich. Bereits bei einer Abgaberate von 0,8 g/Zyklus is eine gute insektizide Wirkung gegen Stechmücken der Art Aedes aegypty und Culex quinquefacsciatus gegeben.

## Patentansprüche

1. Flüssige insektizide Formulierungen in Form von wäßrigen Emulsionen zur Verdampfung mit Hilfe von Elektroverdampfern mit Docht, **dadurch gekennzeichnet, daß** sie enthalten
Transfluthrin, einen oder mehrere Emulgatoren und ein oder mehrere Co-Tenside bzw. Co-Lösungsmittel aus der Gruppe verzweigte und unverzweigte Alkohole mit 3 bis 10 Kohlenstoffatomen, Cycloalkanole mit 5 bis 8 Kohlenstoffatomen, (C₂-C₆)-Alkylester von (C₂-C₆)-Hydroxycarbonsäuren, (C₁-C₁₂)-Alkylpyrrolidone, (C₁-C₁₂)-Alkylcaprolactame, Cyclohexylpyrrolidon und -caprolactam, (C₄-C₁₂)-Carbonsäuredimethylamide und -diethylamide, Benzylalkohol und hochsiedende Mineralöle.

2. Formulierungen nach Anspruch 1, **dadurch gekennzeichnet, daß** sie zusätzlich organische oder anorganische Hilfsstoffe und/oder Stabilisatoren und/oder Duftstoffe und/oder Farbstoffe enthalten.

3. Formulierungen nach Anspruch 1 oder 2, **dadurch gekennzeichnet, daß** sie enthalten einen oder mehrere Emulgatoren aus der Reihe
a) nichtionische Emulgatoren:
Umsetzungsprodukte von unsubstituierten oder substituierten Phenolen, jeweils ungesättigten oder gesättigten Fettalkoholen, Fettsäuren, Fettsäurealkanolamiden oder Fettaminen, pflanzlichen Ölen oder Fetten, Fettsäurepartialestern von Polyolen mit Ethylenoxid und gegebenenfalls Propylenoxid, Sorbitanester von Fettsäuren, Fettsäureester von Polyolen wie Saccharose, Glucose oder Sorbitan,
b) anionische Emulgatoren:
jeweils 8 bis 22 Kohlenstoffatome enthaltende gesättigte oder ungesättigte Alkansulfonate, Alkylsulfate, Alkylphosphate, Alkylethersulfate, Alkyletherphosphate, Fettsäuresalze, Alkylethercarboxylate, Acyltauride oder -sarkoside,
c) kationische Emulgatoren:
8 bis 22 Kohlenstoffatome enthaltende Aminsalze, quaternäre Ammoniumverbindungen oder Imidazoliniumverbindungen,
d) amphotere Emulgatoren:
8 bis 22 Kohlenstoffatome enthaltende Betaine, Sulfobetaine oder Aminoxide.

4. Formulierungen nach einem der Ansprüche 1 bis 3, **dadurch gekennzeichnet, daß** sie als Emulgator(en) enthalten:
Umsetzungsprodukte von 4 bis 50 Mol Ethylenoxid und gegebenenfalls Propylenoxid mit Phenolen (1 Mol), die durch einen oder mehrere der Reste (C₁-C₁₂)-Alkyl, (C₃-C₆)-Cycloalkyl, Phenyl, Phenyl-(C₁C₃)-alkyl, Methylphenyl-(C₁-C₃)-alkyl substituiert sind, und/oder Umsetzungsprodukte von 5 bis 50 Mol (pro Äquivalent Fettsäurerest) Ethylenoxid und gegebenenfalls Propylenoxid mit (C₁₀-C₂₂)-Fettalkoholen, Fettsäuren oder Fettsäureglyceriden.

5. Formulierungen nach den Ansprüchen 1 bis 4, **dadurch gekennzeichnet, daß** sie desodorierende Mittel enthalten.

6. Formulierungen nach den Ansprüchen 1 bis 5, **dadurch gekennzeichnet, daß** sie, jeweils bezogen auf das Gesamtgewicht der Formulierung, zwischen 0,01 und 10 Gew.-% Transfluthrin, zwischen 0,01 und 5 Gew.-% Emulgator(en), zwischen 0,01 und 5 Gew.-% Co-Tensid(e) bzw. Co-Lösungsmittel und als Rest Wasser enthalten.

7. Vorlösungen zur Herstellung der flüssigen insektiziden Formulierungen nach den Ansprüchen 1 bis 6, **dadurch gekennzeichnet, dass** sie, jeweils bezogen auf das Gesamtgewicht der Vorlösung, zwischen 10 und 70 Gew.-%, vorzugsweise zwischen 15 und 40 Gew-% Transfluthrin, zwischen 10 und 70 Gew.-%, vorzugsweise zwischen 15 und 40 Gew.-% Emulgator(en), zwischen 10 und 60 Gew.-%, vorzugsweise zwischen 20 und 45 Gew.-% Co-Tensid(e) bzw. Co-Lösungsmittel und gegebenenfalls Wasser enthalten.

8. Verfahren zur Herstellung der flüssigen insektiziden Formulierungen nach den Ansprüchen 1 bis 6, **dadurch gekennzeichnet, dass** eine Vorlösung nach Anspruch 7 hergestellt wird, die dann unter sehr guter Durchmischung mit kleinen Portionen Wasser auf das gewünschten Endvolumen zur Emulsion verdünnt wird.

## Claims

1. Liquid insecticidal formulations in the form of aqueous suspensions for vaporization using electric vaporizers fitted with a wick, **characterized in that** they comprise
transfluthrin one or more emulsifiers and one or more co-surfactants (co-solvents) selected from the group consisting of branched or straight-chained alcohols having 3 to 10 carbon atoms, cycloalkanols having 5 to 8 carbon atoms, (C₂-C₆)-alkyl esters of (C₂-C₆)-hydroxycarboxylic acids, (C₁-C₁₂)-alkylpyrrolidones, (C₁-C₁₂)-alkylcaprolactams, cyclohexylpyrrolidone or cyclohexylcaprolactam, N,N-dimethyl- or N,N-diethyl(C₄-C₁₂)-carboxamides, benzyl alcohol and high boiling mineral oils.

2. The formulations according to claim 1, **characterized in that** they additionally comprise organic or inorganic auxiliaries and/or stabilizers and/or perfumes and/or colorants.

3. The formulations according to claim 1 or 2, **characterized in that** they comprise one or more emulsifiers selected from the group consisting of
a) nonionic emulsifiers:
reaction products of unsubstituted or substituted phenols, respectively optionally unsaturated or saturated fatty alcohols, fatty acids, fatty acid alkanolamides or fatty amines, vegetable oils or fats, partial fatty acid esters of polyols with ethylene oxide and, if appropriate, propylene oxide, sorbitan esters of fatty acids, fatty acid esters of polyols such as sucrose, glucose or sorbitan,
b) anionic emulsifiers:
respectively optionally saturated or unsaturated alkanesulfonates, alkyl sulfates, alkyl phosphates, alkyl ether sulfates, alkyl ether phosphates, salts of fatty acids, alkyl ether carboxylates, acyltaurides or acylsarcosides, each of which contains 8 to 22 carbon atoms,
c) cationic emulsifiers:
amine salts, quaternary ammonium compounds or imidazolinium compounds, each of which contains 8 to 22 carbon atoms, and
d) amphoteric emulsifiers:
betaines, sulfobetaines or amine oxides, each of which contains 8 to 22 carbon atoms.

4. The formulations according to any of claims 1 to 3, **characterized in that** the emulsifiers used are reaction products of 4 to 50 mol of ethylene oxide and optionally propylene oxide with phenols (1 mol) which are substituted by one or more of the radicals (C₁-C₁₂)-alkyl, (C₃-C₆)-cycloalkyl, phenyl, phenyl-(C₁-C₃)alkyl, and/or methylphenyl-(C₁-C₃)-alkyl, and/or reaction products of 5 to 50 mol (per equivalent of fatty acid radical) ethylene oxide and optionally propylene oxide with (C₁₀-C₂₂)-fatty alcohols, fatty acids or fatty acid glycerides.

5. The formulations according to any of claims 1 to 4, **characterized in that** they additionally comprise deodorizing agents.

6. The formulations according to any of claims 1 to 5, **characterized in that** they comprise between 0.01 and 10% by weight of transfluthrin, between 0.01 and 5% by weight of emulsifier(s), between 0.01 and 5% by weight of co-tenside(s) (co-solvent(s)) and water as the remainder.

7. Pre-solutions for the preparation of the liquid insecticidal formulations according to any of claims 1 to 6, **characterized in that** they comprise
between 10 and 70, preferably between 15 and 40% by weight of transfluthrin, between 10 and 70, preferably between 15 and 40% by weight of emulsifier(s), between 10 and 60, preferably between 20 and 45% by weight of co-surfactant(s) (co-solvents)) and
optionally water.

8. A process for preparing the liquid insecticidal formulation according to any of claims 1 to 6, **characterized in that** a pre-solution according to claim 7 is prepared which is then diluted to the desired emulsion volume by vigorous mixing with small portions of water.

## Revendications

1. Formulations insecticides liquides sous forme d'émulsions aqueuses destinées à être évaporées au moyen d'électroévaporateurs avec une mèche **caractérisées en ce qu'**elles contiennent de la transfluthrine, un ou plusieurs émulsifiants et un ou plusieurs co-tensioactifs ou co-solvants du groupe des alcools ramifiés et non ramifiés ayant 3 à 10 atomes de carbone, des cycloalcanols ayant 5 à 8 atomes de carbone, des (C₂-C₆)-alkylesters d'acides (C₂-C₆)-hydroxycarboxytiques, des (C₁-C₁₂)-alkylpyrrolidones, des (C₁-C₁₂)-alkylcaprolactames, de la cyclohexylpyrrolidone et -caprolactame, des diméthylamides et diéthylamides d'acides (C₄-C₁₂)-carboxyliques, de l'alcool benzylique et des huiles minérales à haut point d'ébullition.

2. Formulations selon la revendication 1, **caractérisées en ce qu'**elles contiennent en outre des adjuvants organiques ou inorganiques et/ou des stabilisants et/ou des substances odorantes et/ou des colorants.

3. Formulations selon la revendication 1 ou 2, **caractérisées en ce qu'**elles contiennent un ou plusieurs émulsifiants de la série
a) des émulsifiants non ioniques :
des produits de réaction de phénols non substitués ou substitués, d'alcools gras insaturés ou saturés, d'acides gras, d'alcanolamides d'acides gras ou d'amines grasses, d'huiles ou de graisses végétales, d'esters partiels d'acides gras et de polyol avec l'oxyde d'éthylène et éventuellement l'oxyde de propylène, des esters de sorbitan et d'acides gras, des esters d'acides gras et de polyols comme le saccharose, le glucose ou le sorbitan,
b) des émulsifiants anioniques :
des alcanesulfonates saturés ou insaturés contenant 8 à 22 atomes de carbone, des alkylsulfates, des alkylphosphates, des alkyléthersulfates, des alkylétherphosphates, des sels d'acides gras, des alkyléthercarboxylates, des acyltaurides ou -sarcosides ;
c) des émulsifiants cationiques :
des sels d'amines contenant 8 à 22 atomes de carbone, des composés d'ammonium quaternaire ou des composés d'imidazolinium,
d) des émulsifiants amphotères :
des bétaïnes contenant 8 à 22 atomes de carbone, des sulfobétaïnes ou des aminoxydes.

4. Formulations selon l'une des revendications 1 à 3, **caractérisées en ce qu'**elles contiennent comme émulsifiant(s) :
des produits de réaction de 4 à 50 mol d'oxyde d'éthylène et éventuellement d'oxyde de propylène avec des phénols (1 mol), qui sont substitués par un ou plusieurs des restes (C₁-C₁₂)-alkyle, (C₃-C₆)-cycloalkyle, phényle, phényl-(C₁-C₃)-alkyle, méthylphényl-(C₁-C₃)-alkyle, et/ou des produits de réaction de 5 à 50 mol (par équivalent de reste d'acide gras) d'oxyde d'éthylène et éventuellement d'oxyde de propylène avec des alcools gras en (C₁₀-C₂₂), des acides gras ou des glycérides d'acides gras.

5. Formulations selon les revendications 1 à 4, **caractérisées en ce qu'**elles contiennent des agents désodorisants.

6. Formulations selon les revendications 1 à 5, **caractérisées en ce qu'**elles contiennent, dans chaque cas par rapport à la masse totale de la formulation,
entre 0,01 et 10 % en masse de transfluthrine, entre 0,01 et 5 % en masse d'émulsifiant(s), entre 0,01 et 5 % en masse de co-tensioactif(s) ou de co-solvant(s) et comme reste de l'eau.

7. Présolutions pour la préparation des formulations insecticides liquides selon les revendications 1 à 6, **caractérisées en ce qu'**elles contiennent, à chaque fois par rapport à la masse totale de la présolution, entre 10 et 70 % en masse, de préférence entre 15 et 40 % en masse, de transfluthrine, entre 10 et 70 % en masse, de préférence entre 15 et 40 % en masse, d'émulsifiant(s), entre 10 et 60 % en masse, de préférence entre 20 et 45 % en masse, de co-tensioactif(s) ou de co-solvant(s) et éventuellement de l'eau.

8. Procédé de préparation des formulations insecticides liquides selon les revendications 1 à 6, **caractérisé en ce qu'**une présolution selon la revendication 7 est préparée, qui est ensuite diluée en l'émulsion avec de petites portions d'eau au volume final souhaité sous un très bon mélange.
